**Europäisches Patentamt**

**European Patent Office**

**Office européen des brevets**

(19)

(11) Veröffentlichungsnummer: **0 002 446**
**B1**

(12) **EUROPÄISCHE PATENTSCHRIFT**

(45) Veröffentlichungstag der Patentschrift: **20.04.83**

(21) Anmeldenummer: **78101319.8**

(22) Anmeldetag: **07.11.78**

(51) Int. Cl.³: **G 05 D 7/06,**
**F 15 B 13/043,**
**F 16 K 31/42**

(54) **Lastunabhängig arbeitendes elektrisch ansteuerbares Vierwegeventil.**

(30) Priorität: **09.12.77 DE 2754878**

(43) Veröffentlichungstag der Anmeldung:
**27.06.79 Patentblatt 79/13**

(45) Bekanntmachung des Hinweises auf die Patenterteilung:
**20.04.83 Patentblatt 83/16**

(84) Benannte Vertragsstaaten:
**FR GB SE**

(56) Entgegenhaltungen:
**DE - A - 2 523 600**
**GB - A - 1 335 041**
**GB - A - 1 335 042**

**ÖLHYDRAULIK UND PNEUMATIK 20, Nr. 10,**
**1976, R. BARTHOLOMÄUS "Neue**
**Proportionalventile aus Standardbauelementen"**
**Seite 667 bis 669**

(73) Patentinhaber: **Mannesmann Rexroth GmbH**
**Postfach 340 Jahnstrasse 3 - 5**
**D-8770 Lohr/Main (DE)**

(72) Erfinder: **Reiner, Bartholomäus**
**Weinbergstrasse 17**
**D-8781 Neuendorf (DE)**

Lastunabhängig arbeitendes elektrisch an steuerbares Vierwegventil

Die Erfindung betrifft ein lastunabhängig arbeitendes elektrisch ansteuerbares Wegeventil in Vierwege-Ausführung mit einer elektrischen Durchflußmeßeinrichtung, deren elektrisches Ausgangssignal das Istwert-Signal in einem elektrischen Regelkreis zur Regelung der Stellung des Steuerkolbens zur Einhaltung der über ein elektrisches Sollwert-Signal vorgegebenen Durchflußmenge bildet (DE—OS 2 523 600). In bekannter Weise werden derartige Wegeventile von Regelmagneten angesteuert, wobei der Regelmagnet entweder unmittelbar auf den Steuerkolben des Wegeventils wirkt oder bei einem vorgesteuerten Wegeventil auf den Steuerkolben des Vorsteuerventils. Bei diesen bekannten elektrohydraulischen Steuereinrichtungen besteht die Durchflußmeßeinrichtung aus drei Druckfühlern, einem Differenzverstärker und einem radizierenden Steuergerät. Das das radizierende Steuergerät verlassende Signal wird dem dividierenden Steuergerät als Istwertsignal zugeführt. Das Regelsignal ergibt sich aus dem diesen Steuergerät zugeführten Sollwert und dem vom radizierenden Steuergerät zugeführt Istwert. Damit verwertbare Drucksignale zur Ermittelung der Durchflußmenge von den Druckfühlern zu erhalten sind, müssen entsprechend hohe Differenzdrücke der Arbeitsflüssigkeit zwischen Ein- und Ausgang des Ventils vorliegen. Soll beispielsweise ein Arbeitsgerät in Form eines Hydromotors mit geringer Drehzahl betrieben werden, darf diesem nur eine geringe Arbeitsflüssigkeitsmenge zugeführt werden. Die damit verbundenen kleinen Durchströmgeschwindigkeiten durch das Ventil bewirken nur geringe Differenzdrücke zwischen Ein- und Ausgang desselben, die unterhalb des Ansprechverhaltens der Druckfühler liegen. Bei derartigen Betriebsverhältnissen ist eine wirkungsvolle Steuerung ausgeschlossen.

Die Aufgabe der Erfindung besteht in der Schaffung eines lastunabhängig arbeitenden elektrisch ansteuerbaren Wegeventils, das schon bei der geringsten durchfließenden Menge ein verwertbares Regelsignal liefert und das in seiner Grundkonzeption als normales lastabhängiges Proportionalventil ausgebildet sein kann und dessen Lastunabhängigkeit durch ein in einfacher Weise in Plattenbauweise auszuführendes mit dem Wegeventil eine Funktionseinheit bildendes Zusatzgerät erzielbar ist und damit in einfacher Weise lastabhängige Wegeventile in lastunabhängige Proportionalventile umwandeln zu können.

Nach der Erfindung wird dies mit den kennzeichnenden Merkmalen des Anspruches 1 erreicht. Die gute Ansprechempfindlichkeit des Wegeventils ist darauf zurückzuführen, daß das Durchflußmeßgerät nicht wie im bekannten Fall auf Druck, sondern auf die durchfließende Menge direkt anspricht und dadurch dessen Meßkolben eine entsprechende Stellbewegung ausführt, die von dem elektrischen Wege-Meßgerät, das mit dem Meßkolben gekoppelt ist, in ein entsprechend großes elektrisches Signal umgewandelt wird und dieses Signal dem Regelkreis als Istwertsignal zuführbar ist.

Besonders konstruktive Veränderungen an bestehenden lastabhängigen Proportional-Wegeventilen, die mit den erfindungsgemäßen Mitteln in lastunabhängige Proportional-Wegeventile umgewandelt werden sollen, sind nicht erforderlich, da vom Durchflußmeßgerät kein hydraulisches Signal verarbeitet werden muß, wie dies bei dem elektrisch ansteuerbarem Wegeventil nach der GB—A—1 335 042 erforderlich ist. Bei diesem Ventil ist der Durchflußfühler dem Hauptventilkörper eingegliedert, und zwar auf der Verbraucheranschlußseite.

Weitere vorteilhafte Ausgestaltungen der Erfindung nach Anspruch 1 ergeben sich aus den Unteransprüchen. Die zum Anspruch 5 genannte Schrifttumsstelle, Seite 668 linke Spalte, viertletzte Zeile bis mittlere Spalte und erste Zeile in der Zeitschrift "Ölhydraulik und Pneumatik" 20 (1976) Nr. 10 weist darauf hin, daß die Proportionalität bei Wegeventilen durch die Form der Steuerfenster am Steuerkolen zu beeinflussen ist.

Ein Ausführungsbeispiel der Erfindung ist nachfolgend an Hand der Zeichnung beschrieben. Für den elektrischen Regelkreis sind die bekannten Schaltsymbole verwendet. Die Zeichnung veranschaulicht in

Figur 1 einen Axialschnitt des Vierwegeventils einschließlich des Durchflußmeßgerätes,

Figur 2 eine vergrößerte Darstellung des Durchflußmeßgerätes und in

Figur 3 eine Draufsicht auf das Durchflußmeßgerät.

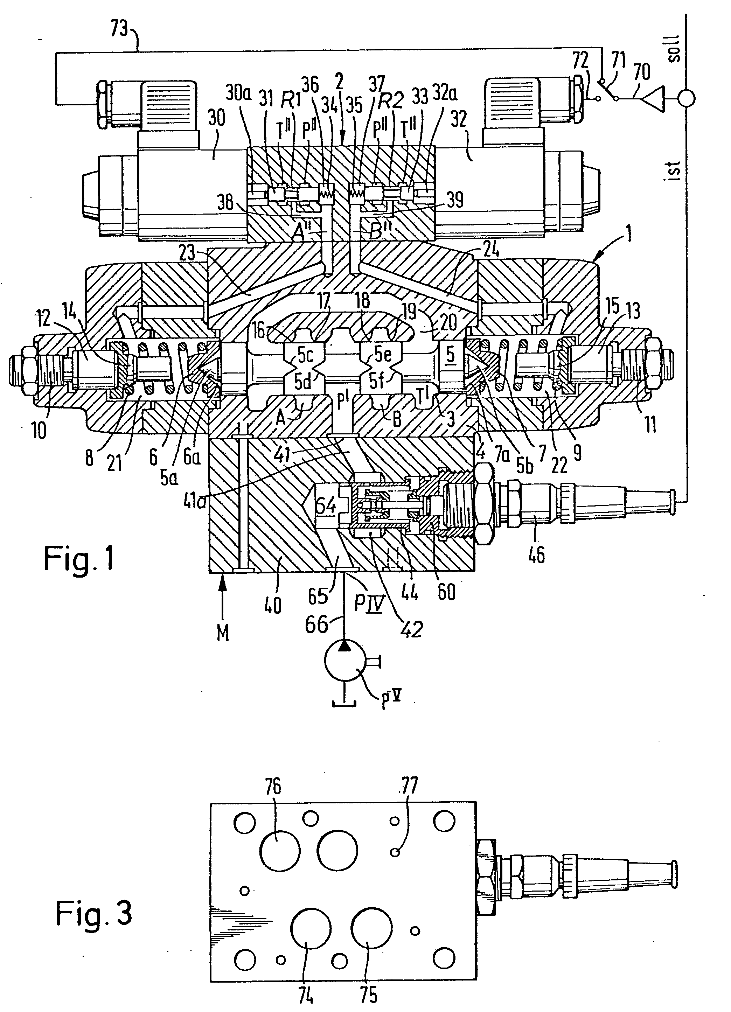

In Figur 1 ist mit 1 das Hauptventil und mit 2 das Vorsteuerventil bezeichnet. In der Axialbohrung 3 des Gehäuses 4 des Hauptventils ist der Steuerkolben 5 axial verschiebbar geführt. An seinen Enden weist der Steuerkolben kegelförmige Verlängerungen 5a, 5b auf, die in entsprechende kegelförmige Ausnehmungen 6a, 7a mit einem größeren Winkel der Federteller 6, 7 sich abstützend eingreifen. Die Federteller 6 und 7 sind mittels der Steuerfedern 8 und 9 in Richtung des Steuerkolbens 5 belastet. Die Einstellung der Vorspannung der Steuerfedern 8 und 9 erfolgt durch die Anstellschrauben 10, 11, die über Abstützkolben 12, 13 an den Federtellern 14, 15 angreifen. Der Steuerkolben 5 weist dreieckförmige Steueröffnungen 5c, 5d, 5e, 5f auf, die mit umlaufenden Steuerkanten 16, 17, 18, 19 der Steuerräume A, B im Gehäuse 4 zusammenwirken und damit je nach der Stellung des Steuerkolbens den Tankanschluß T' mit dem mit einem nicht dargestellten Arbeitsleitungsanschluß A' in Verbindung stehenden Steuerraum A und den Druckanschluß P' mit dem mit einem anderen nicht dargestellten Arbeitsleitungsanschluß B' in Verbindung stehenden Steuerraum B verbinden bzw. in der anderen Schaltstellung des Steuerkolbens den Steuerraum B mit dem Tankanschluß T' über den Verbindungskanal 20 und den Druckanschluß P' mit dem Steuerraum A.

Dadurch, daß die Steueröffnungen dreieckförmig ausgebildet sind, folgt der von den Steueröffnungen freigegebene Durchflußquerschnitt gegenüber dem Verschiebeweg des Steuerkolbens einer quadratischen Funktion, so daß auch bei großen Durchflußmengen und hohen Differenzdrücken an den Steueröffnungen eine ebenso gute Feinsteuerung gewährleistet ist, wie bei kleinen Mengen über dem gesamten Bereich der an den Steueröffnungen auftretenden Differenzdrücke. Die Federräume 21 und 22 stehen über Steuerkanäle 23, 24 mit den Anschlüssen A", B" des Vorsteuerventils 2 in Verbindung. Das Vorsteuerventil 2 wird von zwei von Regelmagneten 30, 32 zu betätigenden Druckminderventilen in 3-Wege-Ausführung gebildet, wobei das eine Druckminderventil mit Regelmagnet 30 und Steuerkolben 31 den Anschluß A" über den Verbindungskanal 38 zum Steuerraum R1 entweder mit dem Druckmittelanschluß P" oder mit dem Tankanschluß T" verbindet und das andere Druckminderventil mit Regelmagneten 32 und Steuerkolben 33 den Anschluß B" über den Verbindungskanal 39 zum Steuerraum R2 entweder mit dem Druckmittelanschluß P" oder mit dem Tankanschluß T". In der Ausgangsstellung der Regelkolben 31 bzw. 33 ist der Anschluß A" bzw. der Anschluß B" mit dem Tank verbunden. Bei elektrischer Erregung des einen oder anderen Regelmagneten wird der betreffende Regelkolben gegen die Kraft der Feder 34 bzw. 35 über den Stößel 30a bzw. 32a verschoben und verbindet hierbei den Anschluß A" bzw. B" mit dem Druckmittelanschluß P". Der hierbei sich in dem Steuerkanal 23, 24 sowie im Federraum 21, 22 aufbauende Steuerdruck wirkt im Federraum 36, 37 des Druckminderventils und beaufschlagt den Regelkolben 31, 33 im gleichen Sinne wie die schwache Rückzugsfeder 34, 35, und zwar gegen die Kraft des Regelmagneten 30, 32.

Sobald der Steuerdruck gemeinsam mit der Federkraft der Kraft des Regelmagneten entspricht, wird der Regelkolben in die Mittelstellung zurück verschoben, in der die Anschlüsse A", B" sowohl vom Druckmittelanschluß P' als auch vom Tankanschluß T' getrennt sind.

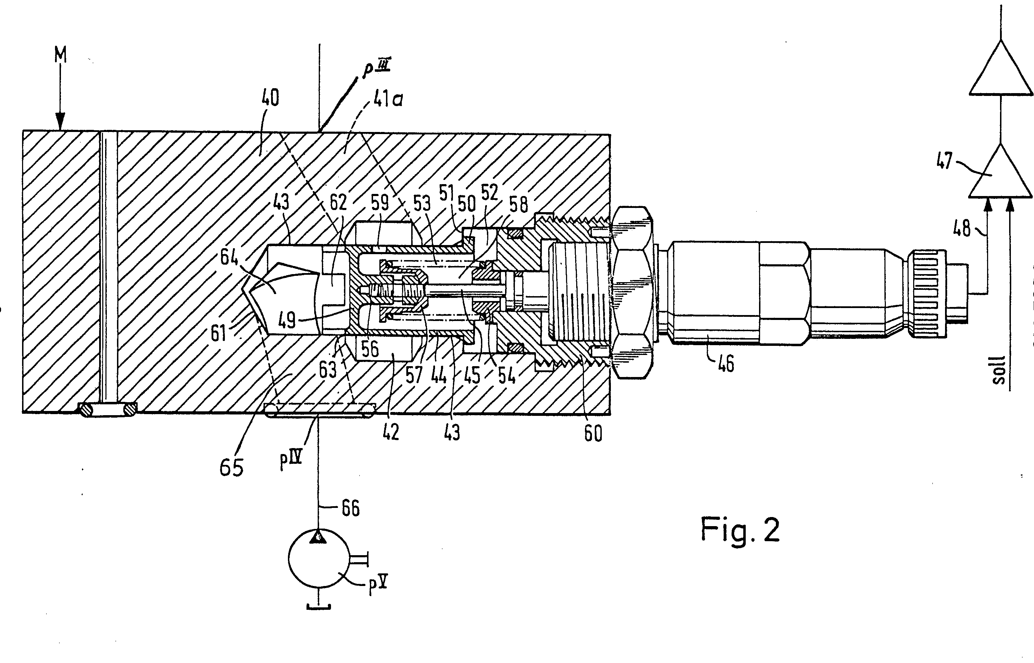

Dadurch, daß der Federraum 21 des Hauptventils über den Kanal 23 mit dem Anschluß A" des Vorsteuerventils verbunden ist und der Federraum 22 des Hauptventils über den Kanal 24 mit dem Anschluß B" des Vorsteuerventils wird die jeweilige Betätigungsrichtung des Hauptsteuerkolbens 5 letztlich von der Stellung der Regelkolben 31, 33 und damit von dem Grad der Erregung des Regelmagneten des Vorsteuerventils festgelegt. Wird der Regelmagnet 30 erregt, wird durch die hierbei auftretende Verbindung des Anschlusses A" mit dem Druckmittelanschluß P" der Federraum 21 des Hauptventils vom Druck des Druckmittels beaufschlagt, der den Hauptsteuerkolben 5 gegen die Kraft der Steuerfeder 9 im Federraum 22 verschiebt und eine Verbindung des Druckmittelanschlusses P' über die Steuerkanten 5e des Hauptsteuerkolbens mit dem Steuerraum B und über die Steuerkante 5c eine Verbindung des Steuerraumes A mit dem Tankanschluß T' herstellt. Wird der Regelmagnet 32 erregt, verschiebt sich der Hauptsteuerkolben gegen die Kraft der Steuerfeder 8 und verbindet dadurch den Steuerraum A mit dem Druckmittelanschluß P' und den Steuerraum B mit dem Tank. Der Druckmittel-Anschluß P' des Hauptventils steht mit dem Anschluß 41 des Durchflußmeßgerätes M in Verbindung. Der Anschluß 41 des Durchflußmeßgerätes steht über den Kanal 41a im Gehäuse 40 mit einem Ringraum 42 (Fig. 2) in Verbindung. In einer den Ringraum axial schneidenden Sackbohrung 43 ist ein Meßkolben 44 geführt, der über eine Stange 45 mit einem nicht näher dargestellten elektrischen Wege-Meßgerät 46 verbunden ist, dessen Signale einem Differenzverstärker 47 über die Leitung 48 zuführbar sind. Der Meßkolben 44 ist als Hohlkolben mit einer Trennwand 49 ausgeführt. Der in Richtung des Wege-Meßgerätes weisende Hohlkolbenteil ist mit einem Anschlagbund 50 versehen, der sich in der gezeigten Ausgangsstellung des Meßkolbens an der Auflagewand 51 im Gehäuseraum 52 abstützt, und zwar mit der geringen Kraft der Druckfeder 53, die sich mit dem einen Ende am sich an der ortsfesten Aufnahmehülse 60 für das Wege-Meßgerät sich abstützenden Federteller 54 und sich mit dem anderen Ende am sich an einem zylindrischen Ansatzkörper 56 der Trennwand 49 sich abstützenden Federteller 57 abstütz. Der mit dem Gehäuseraum 52 in Verbindung stehende Hohlkolbenraum 58 steht über eine Querbohrung 59 mit dem Ringraum 42 in Verbindung. Der in Richtung des Bodens 61 der Sackbohrung 43 weisende Hohlkolbenteil ist mit als rechteckige Ausnehmungen ausgebildeten Steueröffnungen 62 versehen, die mit der von dem Ringraum 42 gebildeten Steuerkante 63 zusammenarbeiten. Der zwischen dem Boden 61 und der Trennwand 49 des Meßkolbens liegende Bereich 64 der Sackbohrung steht über einen Kanal 65 mit dem Anschluß $P^{IV}$ in Verbindung.

Der Anschluß $P^{IV}$ ist über die Leitung 66 mit der Druckmittelquelle $P^V$ verbunden, so daß das Durchflußmeßgerät M unabhängig von der Schaltstellung des Hauptventils 1 immer vom Anschluß $P^{IV}$ zum Anschluß 41 durchströmt wird, wobei sich der Meßkolben entsprechend der Durchflußmenge in Richtung des Weg-Meßgerätes verschiebt und hierbei einen der Durchflußmenge entsprechenden Querschnitt der Steueröffnungen 62 an der Steuerkante 63 des Ringraumes 42 freigibt. Der Verschiebeweg des Meßkolbens, der zur Freigabe der erforderlichen Durchflußmenge erforderlich ist, wird über die Stange 45 auf das Wege-Meßgerätes 46 übertragen, das ein diesem Verschiebeweg entsprechendes elektrisches Signal als Istwert-Signal dem Differenzverstärker 47 über die Leitung 48 zuführt. Im Differenzverstärker wird aus dem eingegebenen Sollwert-Signal mit dem Istwert-Signal das Differenzsignal gebildet und als verstärktes Regelsignal über die Leitung 70 und Umschalter 71 sowie über die Leitung 72 oder 73 dem Regelmagneten 30 oder 32 zugeführt und der betreffende Regelmagnet entsprechend ausgeregelt. (Fig. 1) Die Durchflußmenge wird somit durch die Größe des in den Differenzverstärker eingegebenen Sollwert-Signals in einfacher Weise vorgegeben. Die im Durchflußmeßgerät auftretende Druckdifferenz ändert sich mit der Zunahme der Durchflußmenge infolge der damit ansteigenden den Meßkolben in Schließrichtung belastenden Federkraft durch Verwendung einer Feder mit flacher Federcharakteristik nur geringfügig. Eine Konstanthaltung der Druckdifferenz im Durchflußmeßgerät läßt sich durch einen entsprechenden axialen Verlauf der Steueröffnungen 62 des Meßkolbens erreichen und damit eine einfache Eichung des Durchflußmeßgerätes erzielen. Damit das für die Ansteuerung des Steuerkolbens 5 des Hauptventils 1 erforderliche Steueröl den Meßwert des Durchflußmeßgerätes nicht stört, wird dieses über einen separaten Kanal 77 dem Vorsteuerventil 2 zugeführt. Das Gehäuse 40 des Durchflußmeßgerätes M weist durchgehende Bohrungen 74, 75, 76 für die beiden Arbeitsleitungsanschlüsse und den Tankanschluß für das Hauptventil auf (Fig. 3), so daß die Gehäuse vom Hauptventil und Durchflußmeßgerät eine Funktionseinheit bilden. Wird das Durchflußmeßgerät M mit einem Arbeitsleitungsanschluß des Hauptventils verbunden, muß ein für beide Durchflußrichtungen geeignets Durchflußmeßgerät eingesetzt werden.

**Patentansprüche**

1. Ein lastunabhängig arbeitendes elektrisch ansteuerbares Wegeventil (1) in Vierwege-Ausführung mit einer elektrischen Durchflußmeßeinrichtung, (M) deren elektrisches Ausgangssignal (48) das Istwert-Signal in einem elektrischen Regelkreis zur Regelung der Stellung des Steuerkolbens (5) zur Einhaltung der über ein elektrisches Sollwert-Signal vorgegebenen Durchflußmenge bildet, dadurch gekennzeichnet, daß die Durchflußmeßeinrichtung von einem elektrischen Durchflußmeßgerät (M) gebildet ist, das zumindest in einem der Anschlüsse des Wegeventils (1) angeordnet ist und das einen in Abhängigkeit von der Durchflußmenge sich verschiebbaren Meßkolben (44) und einen Zu- und Abfluß ($P^{IV}$, $P^{III}$) aufweist und

der Meßkolben (44) mit einem das Istwert-signal abgebenden elektrischen Wege-Meßgerät (46) gekoppelt ist.

2. Wegeventil nach Anspruch 1, dadurch gekennzeichnet, daß das Durchflußmeßgerät (M) mit einem eigenen Gehäuse (40) mit dem Gehäuse (4) des Wegeventils (1) zu einer Funktionseinheit vereinigt ist.

3. Wegeventil nach den Ansprüchen 1 und 2, dadurch gekennzeichnet, daß das Durchflußmeßgerät (M) mit dem Zu- oder Abflußanschluß (P', T') des Wegeventils (1) in Wirkverbindung steht.

4. Wegeventil nach Anspruch 3 dadurch gekennzeichnet daß bei vorgesteuerter Ausführung, des Wegeventils (1) das zur Vorsteuerung erforderliche Steueröl am Durchflußmeßgerät (M) vorbeigeführt (77) ist.

5. Wegeventil nach einem der vorhergehenden Ansprüche, dadurch gekennzeichnet, daß die Steueröffnungen (5c) des Steuerkolbens (5) des Wegeventils (1) einer quadratischen Funktion folgen.

6. Wegeventil nach Anspruch 2, dadurch gekennzeichnet, daß das Gehäuse (40) des Durchflußmeßgerätes durchgehende Anschlußkanäle (74, 75, 76) für die Anschlüsse (A', B', T') des Wegeventils (1) aufweist, dessen durchströmende Flüssigkeit vom Meßkolben (44) nicht erfaßt wird.

**Claims**

1. An electrically controlled valve (1), in the form of a four way valve, functioning independently of the load, comprising an electrical flow measuring device (M) whose electrical output signal (48) provides the true value signal in an electric control loop for regulating the position of the control piston (5) in order to maintain the quantity of flow preset by means of an electrical set value signal, characterised in that the flow measuring device is formed by an electrical flowmeter (M) which is mounted at least in one of the connections of the valve (1) and comprises a measuring piston (44) which is displaceable as a function of the flow rate and an inlet and outlet (PIV, PIII), and the measuring piston (44) is coupled to an electrical measuring instrument (46) which delivers the true value signal.

2. Valve as claimed in claim 1, characterised in that the flowmeter (M) with its own housing (40) is joined to the housing (4) of the valve (1) to form a functional unit.

3. Valve as claimed in claims 1 and 2, characterised in that the flowmeter (M) is operatively connected to the inlet or outlet connection (P', T') of the valve (1).

4. Valve as claimed in claim 3, characterised in that, in an embodiment with anticipatory control of the valve (1), the control oil required for the anticipatory control is guided (77) past the flowmeter (M).

5. Valve as claimed in one of the preceding claims, characterised in that the control openings (5c) of the control piston (5) of the valve (1) follow a quadratic function.

6. Valve as claimed in claim 2, characterised in that the housing (40) of the flowmeter comprises connection channels (74, 75, 76) passing through it for the connections (A', B', T') of the valve (1), whilst the liquid flowing therethrough is not measured by the measuring flask (44).

## Revendications

1. Un distributeur (1) à quatre voies fonctionnant indépendamment de la charge, pouvant être commandé électriquement, comportant un dispositif électrique de mesure de début (M), dont le signal de sortie électrique (48) constitue le signal de valeur réelle dans un circuit de régulation électrique pour régler la position du piston de commande (5) afin de maintenir le débit prédéterminé supérieur à un signal de valeur de consigne électrique, caractérisé par le fait que le dispositif de mesure de débit est formé par un débitmètre électrique (M), qui est disposé au moins dans un des raccords du distributeur (1), et qui comporte un piston de mesure (44) qui peut se déplacer en fonction du débit et une entrée et une sortie (P$^{IV}$, P$^{III}$), et le piston de mesure (44) est couplé avec un dispositif de mesure de trajet électrique (46) délivrant le signal de valeur réelle.

2. Distributeur suivant la revendication 1, caractérisé par le fait que le débitmètre (M) qui comporte un boîtier propre (40) est réuni un boîtier (4) du distributeur (1) pour former une unité fonctionnelle.

3. Distributeur suivant les revendications 1 et 2, caractérisé par le fait que le débitmètre (M) est couplé activement avec le raccord d'entrée ou de sortie (P', T') du distributeur (1).

4. Distributeur suivant la revendication 3, caractérisé par le fait que dans le cas d'une réalisation avec commande pilote du distributeur (1), l'huile de commande nécessaire pour la commande pilote est amenée (en 77) au niveau du débitmètre (M).

5. Distributeur suivant une des revendications précédentes, caractérisé par le fait que les ouvertures de commande (5c) du piston de commande (5) du distributeur (1) suivent une fonction quadratique.

6. Distributeur suivant la revendication 2, caractérisé par le fait que le boîtier (40) du débitmètre comporte des canaux de raccordement traversants (74, 75, 76) pour les raccords (A', B', T') du distributeur (1), dont le liquide qui y passe n'est pas détecté par le piston de mesure (44).

Fig. 1

Fig. 3

Fig. 2